(19) Europäisches Patentamt / European Patent Office / Office européen des brevets

(11) **EP 4 547 956 B1**

(12) **EUROPEAN PATENT SPECIFICATION**

(45) Date of publication and mention
of the grant of the patent:
**04.03.2026   Bulletin 2026/10**

(21) Application number: **23740931.3**

(22) Date of filing: **29.06.2023**

(51) International Patent Classification (IPC):
**F03D 7/02** (2006.01)

(52) Cooperative Patent Classification (CPC):
**F03D 7/0224; F03D 7/0292;** F05B 2270/326;
F05B 2270/329; Y02E 10/72

(86) International application number:
**PCT/DK2023/050174**

(87) International publication number:
**WO 2024/002449 (04.01.2024 Gazette 2024/01)**

(54) **WIND TURBINE CONTROL BASED ON TILT AND YAW ANGLE**

WINDTURBINENSTEUERUNG AUF DER BASIS VON NEIGUNGS- UND GIERWINKEL

COMMANDE D'ÉOLIENNE BASÉE SUR L'ANGLE D'INCLINAISON ET D'ORIENTATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.06.2022   IN 202211037588
12.08.2022   DK PA202270405**

(43) Date of publication of application:
**07.05.2025   Bulletin 2025/19**

(73) Proprietor: **VESTAS WIND SYSTEMS A/S**
**8200 Aarhus N (DK)**

(72) Inventors:
• **SUMAN, Rishi**
**8200 Aarhus N (DK)**
• **KRISHNAN JAMUNA, Karthik**
**8200 Aarhus N (DK)**
• **GANTASALA, Krishna Chaitanya**
**8200 Aarhus N (DK)**
• **ADHEENA, Rs**
**8200 Aarhus N (DK)**

(74) Representative: **Vestas Patents Department**
**Hedeager 42**
**8200 Aarhus N (DK)**

(56) References cited:
CN-A- 103 953 503      CN-A- 109 653 947
CN-A- 111 980 868      GB-A- 2 603 774
US-A1- 2010 133 827    US-A1- 2015 132 129
US-A1- 2016 252 075

**Description**

FIELD OF THE INVENTION

The present invention is in the field of control systems of a wind turbine. Specifically, control of blade pitch to reduce tilt and yaw moments.

BACKGROUND OF THE INVENTION

A wind turbine typically comprises a tower and a rotor-nacelle-assembly (RNA) on top of the tower. The RNA comprises a rotor with one or more blades, and a nacelle to house drive train and electrical components.

In modern large wind turbines asymmetric loads acting on the rotor increase component wear. The asymmetric loads acting on the rotor may be caused by wind shear, non-zero inflow angles, wind direction fluctuations, and spatial turbulence.

Loading on the wind turbine results in component parts of the wind turbine wearing out at an increased rate. Techniques such as Tilt and Yaw control (TYC) have been previously developed to control blade pitch to mitigate the effect of asymmetric loads acting on the rotor. Tilt and yaw control normally rely on measurements from blade load sensors which are installed at the root of each blade of a wind turbine.

Known control methods using blade load sensors are described in US2015132129 A1 and US2016252075 A1.

Not all turbines may have blade load sensors installed, and the installation of blade load sensors on such wind turbines can enable control techniques which beneficially mitigate the loading on the wind turbine to improve the lifespan of component parts of the wind turbine.

A problem with installing blade load sensors is that the installation is complex and requires hub drilling, adding new wiring, and hub hardware changes.

SUMMARY OF THE INVENTION

A first aspect of the invention provides a method of controlling a wind turbine, the wind turbine comprising: a tower; and a rotor-nacelle-assembly (RNA) comprising a rotor and a nacelle, the rotor comprising one or more blades, the method comprising:

obtaining tilt angle data indicative of a tilt angle of the RNA;
obtaining yaw angle data indicative of a yaw angle of the RNA;
obtaining a thrust of the rotor;
determining tilt moment data based on the tilt angle data and the thrust, wherein the tilt moment data is indicative of a tilt moment acting on the rotor about a tilt axis;
determining yaw moment data based on the yaw angle data, wherein the yaw moment data is indicative of a yaw moment acting on rotor about a yaw axis; and
controlling a pitch angle of one or more of the blades based on the tilt moment data and the yaw moment data.

Hereby is provided a manner of controlling a wind turbine to mitigate the effect of asymmetric loads acting on the rotor without using blade load sensors.

Optionally the tilt angle data and/or the yaw angle data is obtained by obtaining measurement data and applying a low-pass and a band-pass filter to the measurement data for selecting 0P and 3P content respectively, where 0P and 3P refer to the rotor frequency, with 0P being the constant part at zero frequency and 3P being a frequency of thrice-per-revolution of the rotor.

Optionally obtaining the tilt angle data comprises measuring an inclination of the RNA relative to gravity with an inclinometer, and determining the tilt angle data on the basis of the measured inclination of the RNA.

Optionally the inclinometer is carried by the RNA.

Optionally the inclinometer comprises an accelerometer.

Optionally obtaining the yaw angle data comprises measuring a yaw angle of the RNA with a magnetometer mounted on the RNA.

Optionally the yaw angle data is obtained by measuring a reference yaw angle of the RNA, and then measuring deviation of a yaw angle of the RNA from the reference yaw angle.

Optionally the rotor rotates at a rotor frequency, and the pitch angle varies at a frequency of once-per-revolution (1P) of the rotor.

A further aspect of the invention provides a wind turbine comprising: a tower; a rotor-nacelle-assembly (RNA) comprising a rotor and a nacelle, the rotor comprising one or more blades; and a control system configured to control the wind turbine by the method of the first aspect of the invention.

Optionally the control system comprises one or more sensors configured to generate measurement data, wherein the control system is configured to obtain the tilt angle data and the yaw angle data on the basis of the measurement data.

Optionally the one or more sensors comprise an inclinometer carried by the RNA.

Optionally the inclinometer comprises an accelerometer.

Optionally the one or more sensors comprise a magnetometer carried by the RNA.

BRIEF DESCRIPTION OF THE DRAWINGS

Embodiments of the invention will now be described with reference to the accompanying drawings, in which:

Figure 1 illustrates a wind turbine.

Figure 2 schematically illustrates a cross section of a nacelle of a wind turbine showing a main shaft, a gearbox, and an electrical power generator.

Figure 3 shows the tilt and yaw axes of the rotor.

Figure 4 illustrates a control system for adjusting blade pitch based on a tilt and yaw moment.

Figure 5a illustrates a two-line approximation of a side view of a tilting wind turbine tower with an accelerometer sensor at the top of the tower.

Figure 5b illustrates X, Y and Z axes of an IMU and a tilt angle.

Figure 6 illustrates the RNA at two different yaw angles.

## DETAILED DESCRIPTION OF EMBODIMENT(S)

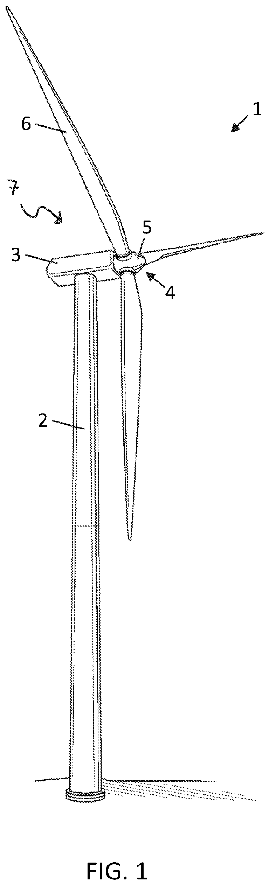

Figure 1 illustrates, in a schematic perspective view, an example of a wind turbine 1. The wind turbine 1 includes a tower 2 and a rotor-nacelle assembly (RNA) 7 at the top of the tower 2. The RNA 7 includes a nacelle 3 and a rotor 4 operatively coupled to a generator housed inside the nacelle 3. In addition to the generator, the nacelle 3 houses various components required for converting wind energy into electrical energy and various components needed to operate, control, and optimize the performance of the wind turbine 1.

The rotor 4 includes a central hub 5 and a plurality of blades 6 that project outwardly from the central hub 5. In the illustrated wind turbine 1, the rotor 4 includes three blades 6, but the number may vary. Moreover, the wind turbine comprises a control system. The control system may be placed inside the nacelle or distributed at a number of locations inside (or external to) the turbine and communicatively connected.

When wind blows against the wind turbine 1 a lift force arises which causes the rotor 4 to rotate, which in turn causes the generator within the nacelle 3 to generate electrical energy.

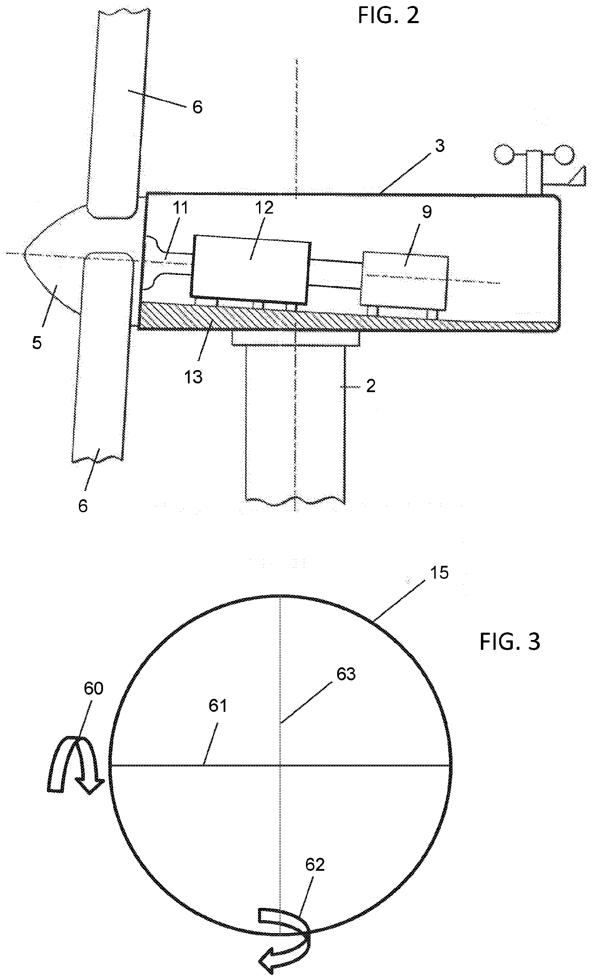

Figure 2 schematically illustrates various components inside the nacelle 3. The nacelle 3 comprises a nacelle frame 13 which structurally supports the nacelle 3 and the components within the nacelle 3. The wind turbine 1 comprises rotor blades 6 which are mechanically connected to an electrical generator 9 via a gearbox 12. In direct drive systems, and other systems, the gearbox 12 may not be present. The electrical power generated by the generator 9 is injected into a power grid via an electrical converter (not shown). A main shaft 11 is mechanically attached to the hub 5 at a front end. A bearing housing (not shown) is mechanically attached to the nacelle frame 13 and is configured to rotatably support the main shaft 11.

As the blades 6 sweep around a rotor plane 15 shown in Figure 3, they experience changes in wind speed and direction. As a result, a tilt moment 60 is applied to the rotor about a horizontal tilt axis 61, and a yaw moment 62 is applied to the rotor about a yaw axis 63. The tilt axis 61 and the yaw axis 63 are perpendicular to each other. The moments 60, 62 are applied by the rotor to the main shaft 11.

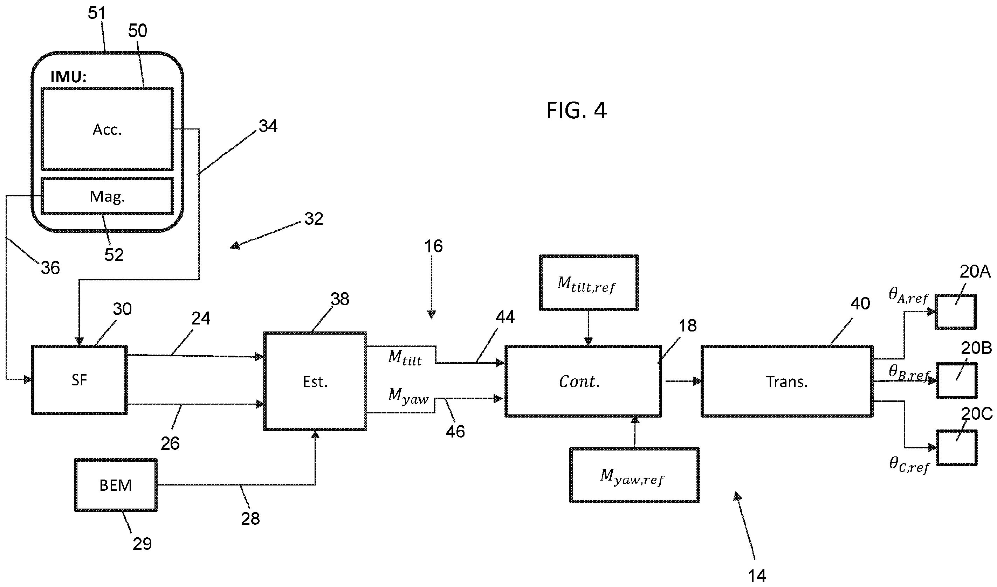

Figure 4 shows elements of a control system configured to control the wind turbine 1. The control system includes functional elements 14 configured to operate a load control algorithm to perform cyclic pitch actuation of the blades 6 based on tilt and yaw moment data 16.

The pitch of each blade is individually controlled by a respective blade pitch actuator 20A, 20B, 20C to reduce the magnitude of tilt and yaw moments of the wind turbine 1.

The rotor 4 rotates at a rotor frequency (1P) and the pitch angle may vary at a frequency of once-per-revolution (1P) and/or at a frequency of twice-per-revolution (2P) and/or at higher frequencies above 2P. The phasing of the pitch angle variation may vary from blade-to-blade.

It has been realised that there is a correlation between tilt/yaw moments acting on the rotor 4 (which are applied in turn by the rotor 4 to the main shaft 11) and tilt/yaw angles of the RNA 7, and that the tilt and yaw moment data 16 can be estimated based on measured tilt and yaw angles of the RNA 7.

The control system of Figure 4 is configured to obtain tilt angle data 24 indicative of a tilt angle of the RNA 7.

The control system of Figure 4 is also configured to obtain yaw angle data 26 indicative of a yaw angle of the RNA 7.

The control system of Figure 4 is also configured to obtain a thrust 28 of the rotor 4. The thrust 28 may be an estimate of the rotor thrust given by a model 29 based on data collected from sensors on the wind turbine 1. The model 29 may be a Blade Element Momentum Theory based Model (BEM). Alternatively, the thrust 28 may be determined by other means.

Optionally, the tilt angle data 24 and/or the yaw angle data 26 are obtained by obtaining measurement data 32 and applying signal filters (SF) 30 to the measurement data 32 to select 0P and 3P content. The measurement data 32 may comprise tilt angle measurement data 34 from a 3-axis accelerometer 50 of an inertial measurement unit (IMU) 51, and yaw angle measurement data 36 from a magnetometer 52 of the IMU 51.

The filters 30 may comprise a low-pass filter (LPF) and a band-pass filter (BPF). The LPF filters out high-frequency content, leaving only steady-state (0P) information. The BPF passes only data at the desired frequency, in this case 3P.

This filtering method is only one example of a method which may be employed to extract 0P and 3P information, others being known to a skilled person.

An estimation method 38 is used to generate the tilt and yaw moment data 16. The moment data may be obtained in a fixed frame coordinate system of the wind turbine. In an embodiment, an offline simulator may be used to model the entire turbine and generate a transfer function by a least squares estimation method. The transfer function may then be used by the estimation method 38 to map yaw angle to yaw moment, and to map tilt angle and thrust to tilt moment. Thus the estimation method 38 is configured to determine the tilt moment data 44 based on the tilt angle data 24 and the thrust 28, and to determine the yaw moment data 46 based on the yaw angle data 26 (i.e. for yaw moment determination the thrust 28 is not needed).

The tilt and yaw moment data 16 comprises tilt moment data 44 indicative of a tilt moment acting on the rotor about the tilt axis, and yaw moment data 46 indicative of a yaw moment acting on the rotor about the yaw axis.

The control system is configured to control a pitch angle of one or more of the blades 6 based on the tilt moment data 44 and the yaw moment data 46. Blade pitch actuators 20A-C may control the pitch angle of the blades 6, each actuator individually controlling a respective one of the blades.

A controller, e.g. in the form of a proportional-integral (PI) controller 18 receives the tilt and yaw moment data 16 and generates outputs based on a proportional-integral control loop mechanism, using a tilt reference setpoint $M_{tilt,ref}$ for the tilt moment data 44 and a yaw reference setpoint $M_{yaw,ref}$ for the yaw moment data 46.

An inverse Coleman transformation 40 is applied to the outputs of the PI controller 18, to generate a pitch reference signal $\theta_{A,ref}$ for the actuator 20A, a pitch reference signal $\theta_{B,ref}$ for the actuator 20B and a pitch reference signal $\theta_{C,ref}$ for the actuator 20C.

The rotor rotates at a rotor frequency and rotates once-per-rotation (i.e., 1P). The pitch angle of each blade can vary at a frequency at or above the rotor frequency, specifically, at 1P or 2P frequency. That is, the pitch angle of a blade 6 can be actuated once or more times per rotation, to counteract asymmetric loads acting on the rotor 4.

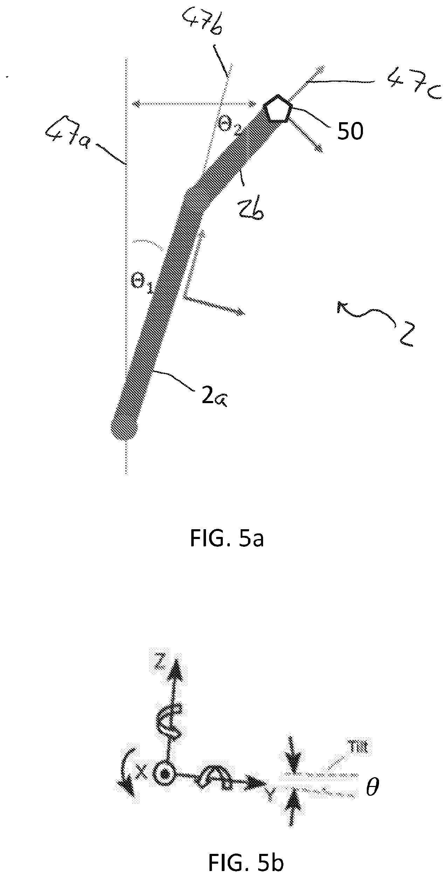

A method of obtaining the tilt angle measurement data 34 will now be described with reference to Figures 5a and 5b. Figure 5a shows the tower bending, modelled as two rigid tower sections 2a, 2b coupled together. The total tilt angle ($\theta$) of the tower 2 in Figure 5a is $\theta_1 + \theta_2$. The tilt angle of the lower tower section 2a ($\theta_1$) is the angle between a first line 47b defining the lower tower section 2a and a vertical line 47a as shown in Figure 5a. The tilt angle of the upper tower section 2b ($\theta_2$) is the angle between a line 47c defining the upper tower section 2b and the first line 47b. Therefore, the total tilt angle $\theta = \theta_1 + \theta_2$ may be approximated as the total tilt angle of the tower 2 relative to the vertical line 47a.

The IMU (here illustrated by accelerometer 50) is positioned on the nacelle at the top of the tower 2, so the angle of orientation of the IMU changes as the total tilt angle $\theta$ changes. Alternatively, an inclinometer mounted to the top of the tower 2 (rather than carried by the RNA 7) may be used to provide the tilt angle measurement data 34.

The accelerometer 50 of the IMU measures linear acceleration along X, Y and Z axes shown in Figure 5b. This enables the IMU to operate as an inclinometer, estimating the tilt angle $\theta$ of the RNA 7 relative to gravity as:

$$\theta = \tan^{-1} \frac{A_z}{\sqrt{A_x^2 + A_y^2}}$$

where:

$A_y$ is linear acceleration measured in the y-direction of the IMU

$A_x$ is linear acceleration measured in the x-direction of the IMU

$A_z$ is linear acceleration measured in the z-direction of the IMU

This estimated tilt angle $\theta$ provides the tilt angle measurement data 34 which is then filtered to provide the 0P and 3P tilt angle data 24.

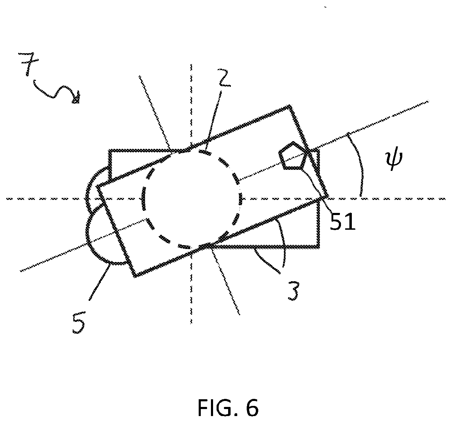

Two different methods of obtaining the yaw angle measurement data 36 will now be described with reference to Figure 6.

Figure 6 shows a top view of the RNA 7 at two different yaw angles. The difference between these two different angles is indicated by a yaw angle ($\psi$). The IMU 51 is mounted at the rear of the nacelle 3.

In one method, the 3-axis accelerometer of the IMU 51 may be used to measure linear acceleration along X, Y and Z axes, and these acceleration measurements are double-integrated to give the yaw angle measurement data 36. Alternatively position data may be obtained directly by use of one or more Global Positioning System (GPS) sensors to obtain the yaw angle measurement data 36.

In a second method, the magnetometer of the IMU 51 may be used to measure the orientation of the IMU 51 relative to the earth's magnetic field, and this orientation used to give the yaw angle measurement data 36.

The yaw angle measurement data 36 may be obtained by measuring a reference yaw angle of the RNA, and then measuring deviation of a current yaw angle of the RNA from the reference yaw angle. The RNA 7 is driven by a yaw drive system (not shown) which rotates the RNA 7 so that it points into the wind, and once the upwind position is reached the yaw drive system is locked. The reference yaw angle may be measured at the time when the yaw drive system is initially locked.

When the yaw drive system is locked, a reference measurement $M_w$ is taken:

$$\text{reference measurement } M_w = \begin{bmatrix} M_x \\ M_y \\ M_z \end{bmatrix}$$

where $M_x$, $M_y$ and $M_z$ are reference magnetic field measurements in the X, Y, Z coordinate system of the magnetometer 52.

For the reference measurement, a reference yaw angle, a, relative to magnetic north is given by $a = atan2 (M_z, M_x)$

Then a current measurement $N_w$ is taken:

$$\text{current measurement } N_w = \begin{bmatrix} N_x \\ N_y \\ N_z \end{bmatrix}$$

where $N_x$, $N_y$ and $N_z$ are current magnetic field measurements in the X, Y, Z coordinate system of the magnetometer 52.

For the current measurement, a current yaw angle, b, relative to magnetic north is given by $b = atan2(N_z, N_x)$

The difference between the yaw angles a and b gives a yaw drift:

$$Y_d = (a - b)\frac{180}{\pi}$$

The yaw drift $Y_d$ provides the yaw angle measurement data 36 which is filtered to provide the 0P and 3P yaw angle data 26.

A benefit of the methods described above is that the measurement data 32 can be determined with one or more non-intrusive sensors, such as an IMU 51. This enables the control system of Figure 4 to determine the tilt moment data 44 and yaw moment data 46 without using blade load sensors. The IMU 51 can be retrofitted to existing wind turbines without invasive modification (which would be necessary for blade load sensors).

Although the invention has been described above with reference to one or more preferred embodiments, it will be appreciated that various changes or modifications may be made without departing from the scope of the invention as defined in the appended claims.

## Claims

1. A method of controlling a wind turbine, the wind turbine comprising: a tower; and a rotor-nacelle-assembly (RNA) comprising a rotor and a nacelle, the rotor comprising one or more blades, the method comprising:

    obtaining tilt angle data indicative of a tilt angle of the RNA;

    obtaining yaw angle data indicative of a yaw angle of the RNA;
    obtaining a thrust of the rotor;
    determining tilt moment data based on the tilt angle data and the thrust, wherein the tilt moment data is indicative of a tilt moment acting on the rotor about a tilt axis;
    determining yaw moment data based on the yaw angle data, wherein the yaw moment data is indicative of a yaw moment acting on the rotor about a yaw axis; and
    controlling a pitch angle of one or more of the blades based on the tilt moment data and the yaw moment data.

2. A method according to claim 1, wherein the tilt angle data and/or the yaw angle data is obtained by obtaining measurement data and applying a low-pass and a band-pass filter to the measurement data for selecting 0P and 3P content respectively.

3. A method according to any preceding claim, wherein obtaining the tilt angle data comprises measuring an inclination of the RNA relative to gravity with an inclinometer, and determining the tilt angle data on the basis of the measured inclination of the RNA.

4. A method according to claim 3, wherein the inclinometer is carried by the RNA.

5. A method according to claim 3 or 4, wherein the inclinometer comprises an accelerometer.

6. A method according to any preceding claim, wherein obtaining the yaw angle data comprises measuring a yaw angle of the RNA with a magnetometer mounted on the RNA.

7. A method according to any preceding claim, wherein the yaw angle data is obtained by measuring a reference yaw angle of the RNA, and then measuring deviation of a yaw angle of the RNA from the reference yaw angle.

8. A method according to any preceding claim, wherein the rotor rotates at a rotor frequency, and the pitch angle varies at a frequency of once-per-revolution (1P) of the rotor.

9. A wind turbine (1) comprising: a tower (2); a rotor-nacelle-assembly (RNA) (7) comprising a rotor (4) and a nacelle (3), the rotor comprising one or more blades; and a control system configured to control the wind turbine by the method of any preceding claim.

10. A wind turbine according to claim 9, wherein the control system comprises one or more sensors configured to generate measurement data, wherein the control system is configured to obtain the tilt angle data and the yaw angle data on the basis of the measurement data.

11. A wind turbine according to claim 9 or 10, wherein the one or more sensors comprise an inclinometer carried by the RNA.

12. A wind turbine according to claim 11, wherein the inclinometer comprises an accelerometer.

13. A wind turbine according to claim 10, 11 or 12, wherein the one or more sensors comprise a magnetometer carried by the RNA.

**Patentansprüche**

1. Verfahren zum Steuern einer Windkraftanlage, wobei die Windkraftanlage Folgendes umfasst: einen Turm; und eine Rotor-Gondel-Baugruppe (RNA), umfassend einen Rotor und eine Gondel, wobei der Rotor ein oder mehrere Blätter umfasst, wobei das Verfahren Folgendes umfasst:

   Erhalten von Neigungswinkeldaten, die auf einen Neigungswinkel der RNA hinweisen;
   Erhalten von Gierwinkeldaten, die auf einen Gierwinkel der RNA hinweisen;
   Erhalten eines Schubs des Rotors;
   Bestimmen von Neigungsmomentdaten auf Basis der Neigungswinkeldaten und des Schubs, wobei die Neigungsmomentdaten ein Hinweis auf ein Neigungsmoment sind, das auf den Rotor um eine Neigungsachse wirkt;
   Bestimmen von Giermomentdaten auf Basis der Gierwinkeldaten, wobei die Giermomentdaten ein Hinweis auf ein Giermoment sind, das auf den Rotor um eine Gierachse wirkt; und
   Steuern eines Blattwinkels eines oder mehrerer der Blätter auf Basis der Neigungsmomentdaten und der Giermomentdaten.

2. Verfahren nach Anspruch 1, wobei die Neigungswinkeldaten und/oder die Gierwinkeldaten durch Erhalten von Messdaten und Anwenden eines Tiefpass- und eines Bandpassfilters auf die Messdaten zum Auswählen eines OP- bzw. 3P-Gehalts erhalten werden.

3. Verfahren nach einem vorstehenden Anspruch, wobei Erhalten der Neigungswinkeldaten Messen einer Neigung der RNA relativ zu Schwerkraft mit einem Neigungsmesser und Bestimmen der Neigungswinkeldaten auf Basis der gemessenen Neigung der RNA umfasst.

4. Verfahren nach Anspruch 3, wobei der Neigungsmesser von der RNA getragen wird.

5. Verfahren nach Anspruch 3 oder 4, wobei der Neigungsmesser einen Beschleunigungsmesser umfasst.

6. Verfahren nach einem vorstehenden Anspruch, wobei Erhalten der Gierwinkeldaten Messen eines Gierwinkels der RNA mit einem auf der RNA montierten Magnetometer umfasst.

7. Verfahren nach einem vorstehenden Anspruch, wobei die Gierwinkeldaten durch Messen eines Referenz-Gierwinkels der RNA und anschließendes Messen einer Abweichung eines Gierwinkels der RNA vom Referenz-Gierwinkel erhalten werden.

8. Verfahren nach einem vorstehenden Anspruch, wobei sich der Rotor mit einer Rotorfrequenz dreht und der Blattwinkel mit einer Frequenz von einmal pro Umdrehung (1P) des Rotors variiert.

9. Windkraftanlage (1), umfassend: einen Turm (2); eine Rotor-Gondel-Baugruppe (RNA) (7), umfassend einen Rotor (4) und eine Gondel (3), wobei der Rotor ein oder mehrere Blätter umfasst; und ein Steuersystem, das zum Steuern der Windkraftanlage durch das Verfahren nach einem vorstehenden Anspruch konfiguriert ist.

10. Windkraftanlage nach Anspruch 9, wobei das Steuersystem einen oder mehrere Sensoren umfasst, die zum Erzeugen von Messdaten konfiguriert sind, wobei das Steuersystem so konfiguriert ist, dass es auf Basis der Messdaten die Neigungswinkeldaten und die Gierwinkeldaten erhält.

11. Windkraftanlage nach Anspruch 9 oder 10, wobei der eine oder die mehreren Sensoren einen Neigungsmesser umfassen, der von der RNA getragen wird.

12. Windkraftanlage nach Anspruch 11, wobei der Neigungsmesser einen Beschleunigungsmesser umfasst.

13. Windkraftanlage nach Anspruch 10, 11 oder 12, wobei der eine oder die mehreren Sensoren ein Magnetometer umfassen, das von der RNA getragen wird.

**Revendications**

1. Procédé de commande d'une éolienne, l'éolienne comprenant : une tour ; et un ensemble rotor-nacelle (RNA) comprenant un rotor et une nacelle, le rotor comprenant une ou plusieurs pales, le procédé comprenant :

l'obtention de données d'angle d'inclinaison indicatives d'un angle d'inclinaison du RNA ;
l'obtention de données d'angle de lacet indicatives d'un angle de lacet du RNA ;
l'obtention d'une poussée du rotor ;
la détermination de données de moment d'inclinaison sur la base des données d'angle d'inclinaison et de la poussée, dans lequel les données de moment d'inclinaison sont indicatives d'un moment d'inclinaison agissant sur le rotor autour d'un axe d'inclinaison ;
la détermination de données de moment de lacet sur la base des données d'angle de lacet, dans lequel les données de moment de lacet sont indicatives d'un moment de lacet agissant sur le rotor autour d'un axe de lacet ; et
la commande d'un angle de calage d'une ou plusieurs des pales sur la base des données de moment d'inclinaison et des données de moment de lacet.

2.  Procédé selon la revendication 1, dans lequel les données d'angle d'inclinaison et/ou les données d'angle de lacet sont obtenues en obtenant des données de mesure et en appliquant un filtre passe-bas et un filtre passe-bande aux données de mesure pour sélectionner respectivement le contenu OP et 3P.

3.  Procédé selon une quelconque revendication précédente, dans lequel l'obtention des données d'angle d'inclinaison comprend la mesure d'une inclinaison du RNA par rapport à la gravité à l'aide d'un inclinomètre, et la détermination des données d'angle d'inclinaison sur la base de l'inclinaison mesurée du RNA.

4.  Procédé selon la revendication 3, dans lequel l'inclinomètre est porté par le RNA.

5.  Procédé selon la revendication 3 ou 4, dans lequel l'inclinomètre comprend un accéléromètre.

6.  Procédé selon une quelconque revendication précédente, dans lequel l'obtention des données d'angle de lacet comprend la mesure d'un angle de lacet du RNA avec un magnétomètre monté sur le RNA.

7.  Procédé selon une quelconque revendication précédente, dans lequel les données d'angle de lacet sont obtenues en mesurant un angle de lacet de référence du RNA, puis en mesurant l'écart d'un angle de lacet du RNA par rapport à l'angle de lacet de référence.

8.  Procédé selon une quelconque revendication précédente, dans lequel le rotor tourne à une fréquence de rotor et l'angle de calage varie à une fréquence d'une fois par tour (1P) du rotor.

9.  Éolienne (1) comprenant : une tour (2) ; un ensemble rotor-nacelle (RNA) (7) comprenant un rotor (4) et une nacelle (3), le rotor comprenant une ou plusieurs pales ; et un système de commande configuré pour commander l'éolienne par le procédé selon une quelconque revendication précédente.

10. Éolienne selon la revendication 9, dans laquelle le système de commande comprend un ou plusieurs capteurs configurés pour générer des données de mesure, dans lequel le système de commande est configuré pour obtenir les données d'angle d'inclinaison et les données d'angle de lacet sur la base des données de mesure.

11. Éolienne selon la revendication 9 ou 10, dans laquelle les un ou plusieurs capteurs comprennent un inclinomètre porté par le RNA.

12. Éolienne selon la revendication 11, dans laquelle l'inclinomètre comprend un accéléromètre.

13. Éolienne selon la revendication 10, 11 ou 12, dans laquelle les un ou plusieurs capteurs comprennent un magnétomètre porté par le RNA.

FIG. 1

FIG. 2

FIG. 3

FIG. 4

FIG. 5a

FIG. 5b

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015132129 A1

- US 2016252075 A1